# EUROPEAN PATENT SPECIFICATION

(11) **EP 2 010 616 B1**
(45) Date of publication and mention of the grant of the patent: **27.01.2010**
(21) Application number: 07760077.3
(22) Date of filing: 04.04.2007
(51) Int. Cl.: C09D 109/00

(54) **POLYMER DISPERSION AND METHOD OF USING SAME AS A WATER VAPOR BARRIER**
POLYMERDISPERSION UND VERFAHREN ZU IHRER VERWENDUNG ALS WASSERDAMPFBARRIERE
DISPERSION DE POLYMÈRE ET PROCÉDÉ D'UTILISATION DE CELLE-CI EN TANT QUE BARRIÈRE À LA VAPEUR D'EAU

(30) Priority: 07.04.2006 US 399817
(43) Date of publication of application: 07.01.2009
(73) Proprietor: BASF SE, 67056 Ludwigshafen (DE)
(72) Inventor: BURGHART, Armin, Charlotte, North Carolina 28273 (US); TAKAMURA, Koichi, Charlotte, North Carolina 28202 (US)
(86) International application number: PCT/US2007/065935
(87) International publication number: WO 2007/118112

(56) References cited:
- EP-A2- 0 795 591

## Description

### BACKGROUND OF THE INVENTION

The invention relates to polymer dispersions, also known as latices, particularly polymer dispersions which are electrically neutral or mildly anionic that can be used as a water vapor barrier.

Water can damage many different types of substrates. For example, wood and wood-based products can shrink or swell depending on the moisture content within the wood and such shrinking and swelling can cause warping and cracking. Water or water vapor can also condense on or infiltrate other porous substrates, such as cement, concrete, gypsum, plasterboard, masonry, chipboard, and hardboard, and the presence of water in these substrates can effect the thermal insulation of these materials, lead to the development of mold, or cause structural degradation of the material due to the reaction of ions in the water with the substrate. Such infiltration is not limited to substrates that have direct contact with water in its liquid form. Water vapor can also pass into or through the walls of high-humidity areas, such as kitchens, bathrooms, industrial rooms, and basements, due to the difference in the partial pressures of water between the areas. In addition, water vapor can also pass from the ground beneath concrete housing foundations into a building and can cause moisture issues. Therefore, a water vapor barrier is desirable for application to substrates with the potential for exposure in these types of high humidity or wet environments.

Several water vapor barrier coatings have been developed using polymer dispersions to form a moisture resistant film on a substrate. Polymer dispersions or latices consist of small particles of polymers, typically ranging in size from 60 nm to 250 nm, dispersed in water. When dried at temperatures above the polymer dispersion's minimum film-forming temperature, polymer dispersions form a polymer film that can be clear or opaque, hard or tacky, and plastic or elastic, depending on the particular properties of the polymer dispersion. Though a polymer film may not be visible after drying, it often provides critical properties to the end product.

One type of polymer dispersion that is known to form film that is highly impermeable to water is an aqueous polymer dispersion made from vinylidene chloride and n-butyl acrylate monomers. Although films formed from these dispersions are highly effective as a barrier in blocking water and water vapor, the vinylidene chloride in the polymer can be subject, over time, to progressive hydrolysis, forming hydrochloric acid. The hydrochloric acid can reduce the storage stability of the coating formulation formed from the polymer dispersion. The hydrochloric acid can also react with metal on or in the substrate to which it is applied (such as rebar within concrete) and cause corrosion of the metal, thus damaging the substrate.

Another type of polymer dispersion known to form film that is highly impermeable to water is an aqueous polymer dispersion made from vinyl-aromatic structures and conjugated dienes, as described in U.S. Patent No. 6,258,890. In U.S. Patent No. 6,258,890, the alkali metal ion content is less than 0.5%, based on the mass of the dispersed polymer, to provide the desired water vapor barrier properties. This is generally accomplished by using emulsifiers and free-radical initiators with ammonium ions rather than alkali metal ions, e.g., using ammonium peroxodisulfate rather than sodium peroxodisulfate as a free-radical initiator. Although these films also form effective water vapor barriers, the ammonium ions present in the film can result in the release of ammonia to the atmosphere during curing.

Another disadvantage of the known anionic aqueous polymer dispersions used to produce moisture barriers for cement and concrete surfaces is that the high valency cations (such as Ca²⁺ and Mg²⁺) present in cement and concrete surfaces causes coagulation of the anionic polymers reducing the adhesion of the film to the substrate. In order to maintain colloidal stability, nonionic surfactants with a high molecular mass of polyethyleneoxide (EO)ₙ where n > 20 generally have to be added to the dispersion to prevent coagulation. These nonionic surfactants undesirably reduce the ability of the cured polymer film to act as a water vapor barrier.

### BRIEF SUMMARY OF THE INVENTION

The present invention overcomes the problems of the prior art by providing a material that is protected at least in part from exposure from water vapor, comprising a substrate and a film provided adjacent to said substrate, the film comprising a polymer derived from one or more copolymerizable nonionic monomers polymerized in the presence of at least one nonionic surfactant and in the absence of ionic surfactants. Preferably, the cloud temperature of the at least one nonionic surfactant is less than the polymerization temperature used to polymerize the nonionic monomers. In one preferred embodiment, the at least one nonionic surfactant includes a nonionic surfactant comprising an alkylene oxide adduct of an alkyl alcohol, alkylbenzene alcohol or dialkylbenzene alcohol, wherein the number of alkylene oxide groups is less than or equal to 14. More preferably, the at least one nonionic surfactant includes at least one ethylene oxide and/or propylene oxide (EO)ₘ(PO)ₙ adduct of an alkyl alcohol, alkylbenzene alcohol or dialkylbenzene alcohol, wherein (m+n) ≤14. More preferably, the at least one nonionic surfactant includes an ethylene oxide adduct of tridecyl alcohol with between 6 and 10 moles of ethylene oxide. The polymer is derived from nonionic monomers and is preferably not derived from ionic monomers.

In a preferred embodiment, the film is formed by applying adjacent to the substrate an electrically neutral polymer dispersion comprising at least one polymer dispersed in a dispersing medium, wherein the polymer dispersion is formed by (a) polymerizing one or more nonionic copolymerizable monomers at a polymerization temperature in the presence of at least one nonionic surfactant and in the absence of ionic surfactants and (b) evaporating the dispersing medium. By using the nonionic surfactant, a colloidally-stable polymer dispersion can be produced, e.g., by emulsion polymerization. In a preferred embodiment, the film is free of ammonium ions and ammonia. Typically, the film is applied directly to an underlying substrate for use as a water vapor barrier layer.

The invention also includes a dispersion, comprising (a) at least one polymer dispersed in a dispersing medium, wherein the dispersion is formed by polymerizing one or more nonionic copolymerizable monomers at a polymerization temperature in the presence of at least one nonionic surfactant and in the absence of ionic surfactants, wherein the cloud temperature of the at least one nonionic surfactant is less than the polymerization temperature and (b) at least one pigment. The at least one nonionic surfactant preferably includes a nonionic surfactant comprising an alkylene oxide adduct of an alkyl alcohol, alkylbenzene alcohol or dialkylbenzene alcohol, wherein the number of alkylene oxide groups is less than or equal to 14. More preferably, the at least one nonionic surfactant includes a nonionic surfactant comprising an ethylene oxide and/or propylene oxide (EO)ₘ(PO)ₙ adduct of an alkyl alcohol, alkylbenzene alcohol or dialkylbenzene alcohol, wherein (m+n) ≤ 14. The present invention also includes a film that is formed by evaporating the dispersion. The film according to the invention is typically provided adjacent to a substrate.

The invention further includes a method of reducing the ability of water vapor to contact a substrate. The method comprises applying a water vapor barrier composition adjacent to the substrate, with the water vapor barrier composition comprising an essentially electrically neutral polymer dispersion formed by polymerizing one or more monomers in a dispersing medium at a polymerization temperature in the absence of anionic surfactants and in the presence of at least one nonionic surfactant, wherein the cloud temperature of the at least one nonionic surfactant is less than the polymerization temperature. In one preferred embodiment, the at least one nonionic surfactant includes a nonionic surfactant comprising an alkylene oxide adduct of an alkyl alcohol, alkylbenzene alcohol or dialkylbenzene alcohol, wherein the number of alkylene oxide groups is less than or equal to 14. More preferably, the at least one surfactant comprises an alkylene oxide adduct of an alkyl alcohol, alkylbenzene alcohol or dialkylbenzene alcohol wherein the alkylene oxide is represented by the formula (EO)ₘ(PO)ₙ, wherein (EO) is ethylene oxide, (PO) is propylene oxide, and (m+n) ≤ 14. The water vapor barrier composition can be used, for example, as a primer composition.

The invention includes a method of making a water vapor barrier composition, coating or film comprising a polymer formed by polymerizing in a dispersing medium one or more nonionic copolymerizable monomers at a polymerization temperature in the presence of at least one nonionic surfactant and in the absence of ionic surfactants, wherein the cloud temperature of the at least one nonionic surfactant is less than the polymerization temperature. The preferred nonionic surfactants are as discussed above.

In accordance with the invention, it was surprising and unexpected that using a nonionic surfactant, particularly an alkylene oxide adduct of an alkyl alcohol, alkylbenzene alcohol or dialkylbenzene alcohol wherein the number of alkylene oxide groups is less than or equal to 14, and more particularly a nonionic surfactant comprising an ethylene oxide and/or propylene oxide (EO)ₘ(PO)ₙ adduct of an alkyl alcohol, alkylbenzene alcohol, or dialkylbenzene alcohol with (m+n) ≤ 14, while eliminating the anionic surfactant conventionally used in emulsion polymerization would not cause instability of the polymer dispersion during the emulsion polymerization process. The resultant polymer dispersion can be used to provide an effective water vapor barrier film as is desired in the invention.

These and other features and advantages of the present invention will become more readily apparent to those skilled in the art upon consideration of the following detailed description, which describes both the preferred and alternative embodiments of the present invention.

### DETAILED DESCRIPTION OF THE INVENTION

The present invention will now be described more fully hereinafter wherein some, but not all embodiments, of the invention are described. Indeed, the invention can be embodied in many different forms and should not be construed as limited to the embodiments set forth herein; rather, these embodiments are provided so that this disclosure will satisfy applicable legal requirements. Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation. The term "comprising" and variations thereof as used herein is used synonymously with the term "including" and variations thereof and are open, non-limiting terms.

The invention includes a material that is protected at least in part from exposure from water vapor, comprising a substrate and a film provided adjacent to said substrate. The substrate can be any variety of substrates, including substrates such as cement, concrete, wet concrete, wet cement, gypsum, plaster, masonry, chipboard, hardboard, drywall, wood, ceramics, marble, stone, tile and the like. The substrates can include various materials including Portland cement, fillers and other known components, and can be reinforced using, for example, metal components.

The film is typically formed from a coating or water vapor barrier composition comprising a polymer dispersed in a dispersing medium by applying the composition to the surface to be coated or protected and evaporating the dispersing medium. The coating or water vapor barrier composition is typically applied directly to the substrate and thus coated on the substrate. Alternatively, however, there can be one or more intermediate layers, so that the film can be coated directly onto an intermediate layer. In some embodiments, the film is applied as a layer on one side or face of the substrate. In other embodiments, the film may envelop the substrate.

The polymer dispersion can be applied by any known method of the art including spraying, brushing, dipping, using application rolls, or by other known methods.
Typically, for substrates such as cement and concrete, the polymer dispersion is applied by spraying or brushing. The film is typically applied at or around room temperature but can be applied at elevated temperatures up to about 70° C if a lower viscosity is needed or if desired for other reasons. The viscosity of the polymer dispersion when applied will vary with the specific formulation in the dispersion, and additives, including fillers, pigments, and thickeners, will affect the final viscosity of the dispersion. Suitable viscosities would be understood by those skilled in the art.

Once the polymer dispersion is applied adjacent a substrate, the dispersing medium is evaporated to form the polymer film or water vapor barrier. The dispersing medium is typically water and is evaporated (i.e. the film is dried) by exposing the polymer dispersion to air at room temperature. However, the dispersing medium can be evaporated more quickly by elevating the temperature of the applied dispersion by applying the dispersion at an elevated temperature or providing the substrate at an elevated temperature as is understood in the art. The water vapor barrier film can include multiple layers by applying a first layer of the polymer dispersion that is subsequently dried and then applying and drying subsequent layers of the dispersion.

In one embodiment, the polymer dispersion is applied adjacent to a substrate to form a film layer, and at least one additional coating layer is applied adjacent to the film layer. The at least one additional coating layer may comprise, for example, a topcoat composition, an adhesive, or an additional film layer. Additional layers may also be added adjacent to the additional coating layer, such as additional coating layers or flooring materials. In one embodiment, the polymer dispersion is applied to a wet concrete substrate to form a film. After film formation, an adhesive is applied to the film layer and another material, such as flooring, is applied. The amount applied to the wet concrete substrate can vary, but a typical value would be about 50-100 1b coating (wet) / 1000 ft².

The film according to the invention comprises a polymer derived from one or more copolymerizable nonionic monomers polymerized in the presence of at least one nonionic surfactant and in the absence of ionic surfactants. In forming the polymer, the cloud temperature of the at least one nonionic surfactant is preferably less than the polymerization temperature. The nonionic surfactant used in forming the polymer, which will be described in more detail herein, preferably comprises an alkylene oxide adduct of an alkyl alcohol, alkylbenzene alcohol or dialkylbenzene alcohol wherein the number of alkylene oxide groups is less than or equal to 14, and more preferably where the alkylene oxide groups include one or more of ethylene oxide (EO)ₘ and propylene oxide (PO)ₙ, wherein (m+n) ≤14.

The monomers used to produce the polymer or polymer dispersion according to the invention are nonionic monomers and preferably include styrene, at least one monomer selected from the group consisting of (meth)acrylate monomers, and preferably (meth)acrylamide or derivatives thereof. Alternatively, the monomers can preferably include styrene and butadiene, optionally at least one monomer selected from the group consisting of (meth)acrylate monomers, and preferably (meth)acrylamide or derivatives thereof. The dispersing medium for the polymerization preferably includes water, thus producing an aqueous polymer dispersion. Furthermore, an emulsion polymerization process is preferably used to produce a polymer dispersion. A seed latex, such as a polystyrene-based seed latex, is preferably used in the emulsion polymerization process.

The polymer or polymer dispersion according to the invention can be prepared using a dispersion, mini-emulsion, or emulsion polymerization process, and preferably an emulsion polymerization process is used. The emulsion polymerization process can be continuous, batch, or semi-batch according to the invention and is preferably a semi-batch process. The process according to the invention can use a single reactor or a series of reactors as would be readily understood by those skilled in the art. For example, a review of heterophase polymerization techniques is provided in M. Antonelli and K. Tauer, Macromol. Chem. Phys. 2003, vol. 204, p. 207-219.

The polymer dispersion is preferably prepared by first charging a reactor with a seed latex, water, and optionally the at least one nonionic surfactant and/or at least one of the monomers (or portions thereof). The seed latex helps initiate polymerization and helps produce a polymer having a consistent particle size. Any seed latex appropriate for the specific monomer reaction can be used and preferably a polystyrene seed is used. The initial charge typically also includes a chelating or complexing agent such as ethylenediamine tetraacetic acid (EDTA). Other compounds such as buffers can be added to the reactor to provide the desired pH for the emulsion polymerization reaction. For example, bases or basic salts such as KOH or tetrasodium pyrophosphate can be used to increase the pH whereas acids or acidic salts can be used to decrease the pH. The initial charge can then be heated to a temperature at or near the reaction temperature, for example, to between 50°C and 100°C. Preferably, the initial charge is heated to a temperature between 70°C and 95°C.

After the initial charge, the monomers that are to be used in the polymerization can be continuously fed to the reactor in one or more monomer feed streams. The monomers can be supplied as a pre-emulsion in an aqueous medium, particularly if acrylate monomers are used in the polymerization. Typically, an initiator feed stream is also continuously added to the reactor at the time the monomer feed stream is added although it may also be desirable to include at least a portion of the initiator solution to the reactor prior to adding a monomer pre-emulsion if one is used in the process. The monomer and initiator feed streams are typically continuously added to the reactor over a predetermined period of time (e.g. 1.5-5 hours) to cause polymerization of the monomers and to thereby produce the polymer dispersion. The nonionic surfactant according to the invention and any other surfactants are also typically added at this time as part of either the monomer stream or the initiator feed stream although they can be provided in a separate feed stream. Furthermore, one or more buffers can be included in either the monomer or initiator feed streams or provided in a separate feed stream to modify or maintain the pH of the reactor.

As mentioned above, the monomer feed stream can include one or more monomers.
The monomers can be fed in one or more feed streams with each stream including one or more of the monomers being used in the polymerization process. For example, styrene and butadiene are typically provided in separate monomer feed streams and can also be added as a pre-emulsion when used in accordance with the invention. It can also be advantageous to delay the feed of certain monomers to provide certain polymer properties or to provide a layered structure (e.g. a core/shell structure). In accordance with the invention, one monomer can be provided in the polymerization process to produce a homopolymer although typically two or more monomers are copolymerized to produce a copolymer.

The monomers for use in the invention are preferably nonionic monomers. Exemplary nonionic monomers include styrene, C1-C8 alkyl and C2 -C8 hydroxyalkyl esters of acrylic and methacrylic acid (e.g. ethyl acrylate, ethyl methacrylate, methyl methacrylate, 2-ethylhexyl acrylate, butyl acrylate, butyl methacrylate, hydroxypropyl acrylate, hydroxypropyl methacrylate, dimethylhydroxypropyl (meth)acrylate, 2-hydroxyethyl acrylate, hydroxyethyl methacrylate, and 2-hydroxybutyl methacrylate), 2-acetoacetoxyethyl methacrylate (AAEM), 1,4-butanediyl diacrylate, acrylamide, methacrylamide, N-methylacrylamide, N,N-dimethylacrylamide, N,N-diethylacrylamide, N-isopropylacrylamide, N-t-butylacrylamide, N-methylolacrylamide, N-vinylformamide, N-vinylmethylacetamide, vinyl esters such as vinyl acetate, vinyl propionate, vinyl butyrate, and vinyl caprolate, divinylbenzene, vinyltriethoxysilane, t-butylstyrene, isopropyl styrene, p-chlorostyrene, acrylonitrile, methacrylonitrile, C4-C8 dienes (e.g. butadiene), isoprene, vinyl chloride, vinylidene chloride, and the like, and mixtures thereof. The monomers used according to the invention can include cross-linking monomers, such as butanediene, 1,4-butanediyl diacrylate, and divinylbenzene.

The monomers for use in the invention can also include a small amount (0.5% by weight or less, based on the total monomer weight) of one or more ionic monomers. Exemplary monomers include carboxylic acid monomers (e.g. itaconic acid, fumaric acid and (meth)acrylic acid). Preferably, the polymer of the invention is not derived from ionic monomers.

In one preferred embodiment of the invention, the monomers include styrene and at least one monomer selected from the group consisting of (meth)acrylate monomers, to produce a styrene-acrylic latex. More preferably, the meth(acrylate) monomers according to the invention include one or more monomers selected from the group consisting of 2-ethylhexylacrylate, n-butylacrylate, and methyl methacrylate. The monomers also preferably include acrylamide, methacrylamide and derivatives thereof (e.g. N-methylacrylamide, N,N-dimethylacrylamide, N,N-diethylacrylamide, N-isopropylacrylamide, N-t-butylacrylamide, and N-methylolacrylamide) to increase the stability of the dispersion.

In another preferred embodiment of the invention, the monomers polymerized include styrene and butadiene to produce a styrene-butadiene latex. In addition to styrene and butadiene, the monomers polymerized in this embodiment can optionally include at least one additional monomer. (Meth)acrylamide or derivatives thereof can preferably be added to increase the dispersion or colloidal stability of the dispersion. Furthermore, monomers such as (meth)acrylate ester monomers can be added, including 2-ethylhexylacrylate, n-butylacrylate, and methyl methacrylate. In yet another preferred embodiment of the invention, a straight acrylic polymer can be produced using the acrylate and methacrylate monomers listed above. For the straight acrylics, methacrylamide or derivatives thereof can be added to increase the stability of the dispersion.

The molecular weight of the polymers produced according to the invention can be adjusted by adding a small amount of molecular weight regulators, generally up to 2.5% by weight, based on the monomers being polymerized. Particular regulators which can be used are organic thio compounds, preferably *tert*-dodecylmercaptan, and also allyl alcohols and aldehydes. Preferably, 0.5 to 2.0 parts of *tert*-dodecylmercaptan is added to the dispersing medium per 100 parts monomer for styrene-butadiene polymers, and preferably 0-0.5 parts of *tert*-dodecylmercaptan is added to the dispersing medium per 100 parts monomer for acrylic polymers.

The initiator feed stream used in accordance with the invention can include at least one initiator or initiator system that is used to cause the polymerization of the monomers in the monomer feed stream. The initiator stream can also include water and other desired components appropriate for the monomer reaction to be initiated. The initiator can be any initiator known in the art for use in emulsion polymerization such as azo initiators; ammonium, potassium or sodium persulfate; or a redox system that typically includes an oxidant and a reducing agent. Commonly used redox initiation systems are described e.g., by A.S. Sarac in Progress in Polymer Science 24, 1149-1204 (1999). Preferred initiators include azo initiators as they are nonionic and do not add alkali metal ions to the dispersion. Another initiator feed stream for use in the invention can include an aqueous solution of sodium persulfate. The initiator stream can optionally include one or more buffers or pH regulators, such as those described above.

In addition to the monomers and initiator, a nonionic surfactant is fed to the reactor.
The nonionic surfactant can be provided in the initial charge of the reactor, provided in the monomer feed stream, provided in an aqueous feed stream, provided in a pre-emulsion, provided in the initiator stream, or a combination thereof. The nonionic surfactant can also be provided as a separate continuous stream to the reactor. The nonionic surfactant is typically provided in an amount of 1-5% by weight, based on the total weight of monomer and surfactant, and is preferably provided in an amount less than 2% by weight.

The preferred nonionic surfactant for use in the invention is an alkylene oxide adduct of an alkyl alcohol, alkylbenzene alcohol or dialkylbenzene alcohol, wherein the number of alkylene oxide groups is less than or equal to 14. More preferably, the nonionic surfactant according to the invention comprises an ethylene oxide and/or propylene oxide (EO)ₘ(PO)ₙ adduct of an alkyl, alkylbenzene or dialkylbenzene alcohol wherein (m+n) ≤ 14, preferably (m+n) ≤ 12, and more preferably (m+n) ≤ 10 (e.g. 6 ≤ (m+n) ≤ 10). The nonionic surfactant can comprise an ethylene oxide adduct of an alcohol (with n=0), a propylene oxide adduct of an alcohol (with m=0) or a combination of ethylene oxide and propylene oxide (with m > 0 and n > 0) adduct of an alcohol. More preferably, the preferred nonionic surfactant is an ethylene oxide adduct of an alkyl alcohol, with n = 0. The alkyl alcohol is preferably a branched or straight chain hydrocarbon having a single hydroxyl group, preferably a terminal hydroxyl group, that is ethoxylated. The alkyl group preferably includes 10 to 22 carbon atoms and more preferably 10 to 16 carbon atoms. Particularly preferred nonionic emulsifiers are ethylene oxide (EO)ₘ adducts of tridecyl alcohol, wherein m = 6, 8, or 10, such as those available from BASF under the ICONOL™ trademark. The term "nonionic" as used herein refers to materials that does not dissociate in the dispersion into positively and negatively charged species.

In accordance with the invention, the nonionic surfactant preferably has a cloud point temperature below the polymerization temperature used to produce the polymer dispersion when the polymerization is in an aqueous medium. The cloud point temperature, also known as a cloud point, cloud temperature, or solubility inversion temperature, is the temperature at which the nonionic surfactant solution becomes cloudy (i.e. at and above that temperature the solution appears cloudy or turbid). As used herein, the cloud point temperature refers to the cloud point of a 1% aqueous solution of the surfactant. The cloud point temperature may be determined by visual observation of the solution over a range of temperatures, or by light scattering measurements. In accordance with the invention, the cloud point temperature is determined using ASTM D2024-65R03. Preferably, the cloud point temperature for a 1% aqueous solution of the nonionic surfactant is between 30°C and 90°C, more preferably between 35°C and 85°C. For the preferred ethylene oxide (EO)ₘ adducts of tridecyl alcohol, wherein m = 6, 8, or 10, the cloud point temperatures are 38-43°C, 40-45°C, and 73-82°C, respectively. The nonionic surfactant also preferably has a HLB (hydrophilic lipophilic balance) at room temperature such that 8 < HLB < 15. More preferably, the HLB is 14 or less.

In addition to the nonionic surfactant of the invention, it may also be desirable to include an additional nonionic surfactant. Suitable nonionic surfactants include polyoxyalkylene alkyl ethers and polyoxyalkylene alkylphenyl ethers (e.g. diethylene glycol monoethyl ether, diethylene glycol diethyl ether, polyoxyethylene lauryl ether, polyoxyethylene stearyl ether, and polyoxyethylene nonylphenyl ether); oxyethylene-oxypropylene block copolymers; sorbitan fatty acid esters (e.g. sorbitan monolaurate available as SPAN® 20 from Merck Schuchardt OHG, sorbitan monooleate available as SPAN® 80 from Merck Schuchardt OHG, and sorbitan trioleate available as SPAN® 85 from Merck Schuchardt OHG); polyoxyethylene sorbitan fatty acid esters (e.g. polyoxyethylene sorbitan monolaurate available as TWEEN® 20 and TWEEN® 21 from Uniqema, polyoxyethylene sorbitan monopalmitate available as TWEEN® 40 from Uniqema, polyoxyethylene sorbitan monostearate available as TWEEN® 60, TWEEN® 60K, and TWEEN® 61 from Uniqema, polyoxyethylene sorbitan monooleate available as TWEEN® 80, TWEEN® 80K, and TWEEN® 81 from Uniqema, and polyoxyethylene sorbitan trioleate available as TWEEN® 85 from Uniqema); polyoxyethylene sorbitol fatty acid esters (e.g. tetraoleic acid polyoxyethylene sorbitol); glycerin fatty acid esters (e.g. glycerol monooleate); polyoxyethylene glycerin fatty acid esters (e.g. monostearic acid polyoxyethylene glycerin and monooleic acid polyoxyethylene glycerin); polyoxyethylene fatty acid esters (e.g. polyethylene glycol monolaurate and polyethylene glycol monooleate); polyoxyethylene alkylamine; and acetylene glycols.

It may also be useful to include one ore more amphoteric surfactants in the polymerization step. Suitable amphoteric surfactants include those described in U.S. Patent No. 6,540,822, which in incorporated herein by reference. An exemplary amphoteric surfactant for use in the invention is REDICOTE® E-7000 surfactant, which is available from Akzo Nobel.

Although additional nonionic or amphoteric surfactants can be combined with the nonionic surfactant of the invention, an anionic surfactant is typically not included in the emulsion polymerization reaction. Furthermore, a cationic surfactant is preferably not used in the emulsion polymerization reaction in accordance with the invention. The dispersion or water vapor barrier composition is also preferably free from nonionic surfactants with a high molecular mass of polyethylene oxide (EO)ₓ with x greater than or equal to 20. These high molecular mass polyethylene oxide nonionic surfactants (with x greater than or equal to 20) hinder the formation of a tight film on a substrate to form a barrier for water and water vapor.

Once polymerization is completed, the polymer dispersion is preferably chemically stripped thereby decreasing its residual monomer content. This stripping process can include a chemical stripping step and/or a physical stripping step. Preferably, the polymer dispersion is chemically stripped by continuously adding an oxidant such as a peroxide (e.g. t-butylhydroperoxide) and a reducing agent (e.g. sodium acetone bisulfite), or another redox pair to the reactor at an elevated temperature and for a predetermined period of time (e.g. 0.5 hours). Suitable redox pairs are described by A.S. Sarac in Progress in Polymer Science 24, 1149-1204 (1999). An optional defoamer can also be added if needed prior to or during the stripping step. In a physical stripping step, a water or steam flush is used to further eliminate the non-polymerized monomers in the dispersion. Once the stripping step is completed, the pH of the polymer dispersion can be adjusted and a biocide or other additives can be added. Amphoteric surfactants may optionally be added after the stripping step or at a later time if desired in the end product.

The polymer particles of the resultant polymer dispersion preferably have an average particle size from 60 to 500 nm, more preferably 130 to 250 nm. The polymer particles prepared according to the invention are characterized by having a narrow particle size distribution. Specifically, the resultant volume-average distribution of polymer particles in the polymer dispersion preferably has a standard deviation of less than 30 %.

Once the polymerization reaction is complete, and the stripping step is completed, the temperature of the reactor is reduced, thus making the nonionic surfactant water-soluble. While not wishing to be bound by theory, it is believed that the hydrocarbon chain of the nonionic surfactant immobilizes the surfactant into the monomer swollen particles, and the surfactant becomes physically trapped in the polymer chain. On the other hand, it is believed that the hydrophilic (EO)ₘ(PO)ₙ chain remains at the polymer particle/water interface and extends towards the water phase, providing colloidal stability for the polymer dispersion. Therefore, though the temperature is below the cloud point temperature of the nonionic surfactant, the surfactant molecules do not migrate to the water phase. Thus, because there are limited amounts of free nonionic surfactant in the water phase of the latex, it is believed that the mechanical properties of the dried film are not adversely affected by the presence of the nonionic surfactants.

In accordance with the invention, the dispersion prepared according to the invention preferably has an ammonium ion content of less than 0.5%, more preferably less than 0.1%. Most preferably, the dispersion is substantially free of ammonium salts, ammonia, and/or ammonium ions. The ammonium ion content is typically controlled by selecting surfactants, initiators and other compounds that do not include ammonium ions for use in preparing the dispersion. As a result, the dispersion has little or no ammonia emissions during the evaporation step in forming the film. Furthermore, the dispersion prepared according to the invention preferably has an alkali metal content less than 0.20%, more preferably less than 0.10%.

The polymer dispersion following the polymerization step according to the invention is essentially electrically neutral in that there are either essentially no charged groups in the polymer or there is essentially a balance of anionic and cationic charged groups in the polymer. The electrophoretic mobility (µ) of the polymer dispersion can be used to measure the zeta potential to show the charge of the polymer dispersion although it is noted that the measurement may indicate an anionic character even though the polymer dispersion is essentially electrical neutral. For example, the resulting polymer dispersion can have a low negative surface charge due to the presence of grafted sulfate groups when a persulfate initiator is used or due to water molecules being absorbed to the polymer surface. However, the polymer dispersion of the invention would be classified as an essentially electrical neutral polymer dispersion as it is neutral and non-ionic in terms of the dispersion stability and acts with a nonionic character upon addition of anionic or cationic surfactants, electrolytes, or high valency electrolytes. Examples of dispersions that are essentially electrically neutral in terms of dispersion stability and act with a nonionic character, but have ionic zeta potential measurements are provided in S. Usui, Y. Imamura and E. Barouch, Destabilization of oil-in-water emulsion with inorganic electrolytes in the absence and in the presence of sodium dodecyl sulfate, J. Dispersion Science and Technology 8(4), 359-384 (1987) (measured zeta potential of decane particles as a function of electrolyte concentration show strongly negatively charged even without the anionic surfactant) and S. Usui and H. Sasaki, Zeta potential measurements of bubbles in aqueous surfactant solutions, J. Colloid and Interface Science, 65(1), 36-45 (1978) (zeta potential of argon gas bubbles in the presence of nonionic surfactant C₁₂POE measures highly negative).

The polymer dispersions prepared with nonionic surfactants and nonionic copolymerizable monomers can be combined with cationic or anionic surfactant solutions, pigments, or electrolytes over a wide range of pH's without causing coagulation of the polymer. Therefore, electrically neutral, anionic (negatively charged), and cationic (positively charged) polymer dispersions can be produced using most of the same conventional emulsion polymerization equipment at the same production facility without causing coagulation and other problems associated with cross-contamination. The polymer dispersions of the invention can also be combined with polymer dispersions having cationic or anionic charges in a blend ratio of greater than 0% to 30% of the charged dispersion to the essentially electrically neutral polymer dispersion of the invention to produce a cationic or anionic polymer emulsion. In one embodiment, cationic pigments are added to an electrically neutral polymer dispersion produced according to the invention, and the resulting cationic polymer dispersion is applied to an anionic substrate to form a water vapor barrier film on the substrate with superior adhesion.

The polymer dispersions prepared according to the invention can be dried to form a film by evaporating the dispersing medium in the dispersion. A film produced according to the invention from a poly(styrene-butadiene), poly(styrene-acrylate) or polyacrylate polymer dispersion exhibits excellent water resistance and absorbs less than 15% water. Furthermore, a film according to the invention produced from poly(styrene-butadiene) polymer dispersions and having greater than 40% styrene also maintains excellent wet tensile strength. As shown in the following examples, the films produced from the preferred embodiments of the invention can absorb less than 10% water and even less than 5% water, especially for polymers having greater than 40% styrene. It was unexpected that the use of a hydrophilic surfactant could produce a dried film that is very hydrophobic, having an initial advancing contact angle of greater than 90 degrees with water. Moreover, it was even more unexpected that the presence of a polar copolymerizable monomer (e.g., acrylamide or methacrylamide) would provide the advantageous hydrophobicity of the resulting film. As the polymer dispersions according to the invention result in films with high moisture resistance, the polymer dispersions and can be used in applications that require a moisture barrier function, such as coatings, and in various high-moisture applications.

Moreover, films produced from poly(styrene-butadiene) or poly(styrene-acrylate) or polyacrylate polymer dispersions according to the invention exhibit relatively high mechanical strength even in the absence of traditional crosslinking if the polymer contains up to 2% (meth)acrylamide or derivatives thereof. This is most apparent in low-T_{g} poly(styrene-butyl acrylate) systems, containing less than 10% styrene, as shown in the examples herein.

In the absence of anionically charged surfactants and vinyl acids, the polymer dispersions or water vapor barrier compositions of the invention are colloidally stable at a wide range of pH's, can include no or low levels of electrolytes, and are stable in the presence of high valency cations such as Ca²⁺, Mg²⁺, and Al³⁺ ions. These high valency cations can leach from the surface of substrates such as Portland cement surfaces, so steric stability of a dispersion in the presence of these cations is beneficial to preventing coagulation of the polymer in a dispersion and in forming a tight, water-resistant film on the substrate. Thus, the polymer dispersions resist or do not promote coagulation within a mixture. Moreover, the electrically neutral polymer dispersions of the invention have a low electrical conductance and a high electrical resistance as is desirable in applications such as in primer paints for corrosion protection or as an additive to cement to act as a moisture barrier.

The invention provides essentially electrically neutral polymer dispersions that can be converted to charged dispersions and that are tolerant to cationically- or anionically-charged additives, such as metal salt mildewcides, fungicides, and other biocides. It was also found that the essentially electrically neutral polymer dispersions according to the invention undergo unique interactions with associative thickeners, such as HEUR-type thickeners.

The polymer dispersions according to the invention can be applied by themselves as a film or a water vapor barrier coating (such as a primer or a topcoat). However, the polymer dispersions according to the invention can be used as a component of a coating composition or water vapor barrier composition comprising other ingredients. The water vapor barrier composition can include pigments, such as finely divided inorganic pigments, in a concentration of up to about 60% by volume or more. The typical pigment concentration in a coating containing pigments is 10-60%, preferably 10-55%, more preferably 20-45%, each by volume. Finely divided pigments suitable for use in coating compositions according to the invention include calcium carbonate, mica, kaolin, talc, quartz sand, quartz flour, chalk, titanium dioxide, dolomite, ground barite, hydrophobized finely divided silica, iron oxide, and other known color pigments. Organic pigments can also be used for coloring purposes. The maximum particle diameter of such pigments is preferably from 1 to 100 µm One preferred pigment is calcium carbonate, which can be used as a pigment or, alternatively, to reduce the oxidation rate of a substrate such as concrete or other cement substrates.

The water vapor barrier compositions according to the invention can also comprise defoamers, thickeners, pigment-dispersing agents, preservatives, and other auxiliary ingredients known in the art. The total concentration of these auxiliaries is preferably less than or equal to 10% by weight, more preferably less than or equal to 5% by weight, based on the overall weight of the aqueous composition. These auxiliaries preferably contain no water-soluble alkali metal ions or water-soluble metal ions. Known coating compositions are typically applied in dry-film thicknesses of up to 2 mm or more, though the water vapor barrier compositions of the present invention can be applied in thicknesses of 0.1-0.5 mm and still achieve a moisture resistance comparable to that shown by a film thickness of more than 2 mm of the existing moisture barrier products (e.g. a MVT value of 4 1b/1000 ft²-day or less). However, thicker applications can be desirable for other purposes. The amount of coating composition used for a particular application can also be measured by weight of polymer per area. In one embodiment, the preferred application of polymer is 20-40 grams dry polymer per square foot, more preferably about 30 grams per square foot. Alternatively, the amount of coating composition applied can be defined by moisture vapor transmission (MVT). For example, for application to a concrete substrate the MVT value can be a value of 4 1b/1000 ft²-day or less, or even 3 1b/1000 ft² -day or less. The amount of coating applied would be determined by the desired MVT value for the water vapor barrier on the specific substrate, and the desired MVT value would be known by one skilled in the art. The polymer dispersions according to the invention can be used as a water vapor barrier in its dried film state, and also as a binder in a sealing composition.

The invention includes a method of reducing the ability of water vapor to contact a substrate by limiting the amount of water vapor that permeates through the water vapor barrier. The method comprises applying a water vapor barrier composition adjacent to the substrate, with the water vapor barrier composition comprising an essentially electrically neutral polymer dispersion formed by polymerizing one or more monomers in a dispersing medium at a polymerization temperature in the absence of anionic surfactants and in the presence of at least one nonionic surfactant, wherein the cloud temperature of the at least one nonionic surfactant is less than the polymerization temperature. In a preferred embodiment, the at least one surfactant comprises an alkylene oxide adduct of an alkyl alcohol, alkylbenzene alcohol or dialkylbenzene alcohol wherein the number of alkylene oxide groups is less than or equal to 14 and more preferably wherein the alkylene oxide groups are represented by the formula (EO)ₘ(PO)ₙ, wherein (EO) is ethylene oxide, (PO) is propylene oxide, and (m+n) ≤ 14.

After the applying step, some of the dispersing medium evaporates, forming a film on the substrate. This film can act as a barrier preventing water vapor present external to the substrate, such as in the air, from contacting the substrate. For example, in one embodiment, the water vapor barrier is applied to a wall surface in a high-humidity room, such as a bathroom. The resultant film reduces the ability of water vapor from the air inside the room from contacting and permeating into the wall. The film can also act as a barrier preventing water vapor present within the substrate from passing from the surface of the substrate into adjacent materials, i.e., into a layer on top of the substrate or a medium adjacent to the substrate. For example, in one embodiment the water vapor barrier is applied to a concrete foundation. The resultant film reduces the ability of water vapor from the ground which diffuses into the foundation to contact the surface of the concrete.

Furthermore, the water vapor barrier of the invention can greatly increase the efficiency of certain types of construction. For example, because many adhesives can only be applied to a completely dry surface, contractors typically must wait 3-4 weeks after concrete is poured until flooring can be applied to a concrete flooring. Applying the dispersion as described herein to the wet concrete can reduce the wait time required between applying and curing a concrete surface and applying a layer on top of the surface, such as flooring.

The invention is further described in the following examples. The examples are merely illustrative and do not in any way limit the scope of the invention as described and claimed. All parts are parts by weight unless otherwise noted.

### EXAMPLES

The polymer latices described below were produced in a seeded semi-batch emulsion polymerization process using reactors equipped with a mechanical stirrer. The total solids content was determined using a CEM Labware 9000 Microwave Moisture/Solids Analyzer with a 70% power setting. The pH was determined using an Orion 310 pH meter calibrated prior to use. The particle size was determined using a NICOMP™ 308 Submicron Particle Sizer and a dynamic light scattering method at an angle of 90° at 25°C. The viscosity of each sample was determined using a Brookfield RV BF-1 DVII viscometer.

### Synthesis of Example Latices - Acrylic Latices

### EXAMPLE 1

The following ingredients were charged in a reaction vessel: 320.3 g water, 14.3 g of a 32% active seed aqueous emulsion (polystyrene), 0.7 g of a 40% aqueous solution of ethylene diamine tetraacetic acid (EDTA), and 0.7 g. of a 10% aqueous solution of potassium hydroxide (KOH). The mixture was heated to 80°C. From an initiator feed of 17.8 g water and 1.9 g sodium persulfate, 12% was removed and added to the reaction mixture. Two separate feeds were added to the vessel at a constant feed rate. The remainder of the initiator feed was added at a constant feed rate over 4.5 hours. A monomer emulsion feed, consisting of 543.1 g water, 21.3 g of a 90% active nonionic surfactant composed of an 8-mole ethylene oxide adduct of tridecyl alcohol, 5.8 g. of 10% aqueous KOH, 27.2 g of 53% aqueous acrylamide, 96.0 g. styrene, 240.0 g. 2-ethylhexylacrylate (2-EHA), and 609.6 g n-butyl acrylate (n-BA), was added over 4.0 hours to the reactor. During the duration of the feeds, the temperature was maintained at 80°C. The relative concentration of each monomer and surfactant in the monomer emulsion feed is reflected in Table 1. After the feeds were completed, the monomer emulsion tank was flushed with 28.8 g water. After a 30 minute post-reaction period the dispersion was post-stripped by adding the following two mixtures as two separate feeds over the course of an hour at a constant temperature of 80°C: (a) 2.6 g 70% *tert*-butyl hydroperoxide solution and 24.0 g water, and (b) 2.0 g sodium metabisulfite, 1,2 g acetone, and 23.4 g water. After the temperature was maintained for 15 minutes following the two additional feeds, the polymer dispersion was cooled, and optional post-additions (such as biocide) were added. The resulting polymer dispersion had 49.5% total solids, a mean particle size of 175 nm, a pH of 3.4, and a viscosity of 210 cP.

### EXAMPLE 2

Example 2 was prepared using the method described for Example 1, but with the monomers, relative concentration of each monomer, and surfactant in the monomer emulsion feed as reflected in Table 1. The resulting polymer dispersion had 49.6% total solids, a mean particle size of 156 nm, a pH of 3.0, and a viscosity of 470 cP.

### EXAMPLE 3

Example 3 was prepared using the method described for Example 1, but with the monomers, the relative concentration of each monomer, and surfactant in the monomer emulsion feed as reflected in Table 1. The resulting polymer dispersion had 49.6% total solids, a mean particle size of 196 nm, a pH of 3.2, a viscosity of 400 cP, and the resulting polymer had a glass transition temperature (Tg) of -42°C.

### EXAMPLE 4

Example 4 was prepared using the method described for Example 1, but with the monomers, the relative concentration of each monomer, and surfactant in the monomer emulsion feed as reflected in Table 1. The resulting polymer dispersion had 49.0% total solids, a mean particle size of 179 nm, a pH of 2.6, and a viscosity of 50 cP.

### EXAMPLE 5

Example 5 was prepared using the method described for Example 1, but with the monomers, the relative concentration of each monomer, and surfactant in the monomer emulsion feed as reflected in Table 1. The resulting polymer dispersion had 49.9% total solids, an average particle size of 185 nm, a pH of 3.2, and a viscosity of 550 cP.

### EXAMPLE 6

Example 6 was prepared using the method described for Example 1, but the initial charge had 346.7 g water and the monomer emulsion mixture feed had 501.9 g water, 4.9 g 10% aqueous KOH, 37.0 g 53% aqueous acrylamide, 441.0 g styrene, 519.4 g n-butyl acrylate, and no 2-ethylhexylacrylate. The relative concentration of each monomer and surfactant in the monomer emulsion feed are reflected in Table 1. The initiator feed consisted of 26.0 g water and 1.9 g sodium persulfate. The resulting polymer dispersion had 49.8% total solids, an average particle size of 201 nm, a pH of 4.4, a viscosity of 1130 cP, and the resulting polymer had a T_{g} of +11 °C.

### EXAMPLE 7

Example 7 was prepared using the method described for Example 1, but with a relative concentration of each monomer and surfactant in the monomer emulsion feed as reflected in Table 1. The initiator feed consisted of 26.0 g water and 1.9 g sodium persulfate. The pH of the polymer dispersion was adjusted after polymerization with a 10% aqueous solution of sodium hydroxide (NaOH). The resulting polymer dispersion had 49.6 % total solids, an average particle size of 16.5 nm, a pH of 7.4 (after pH adjustment), and a viscosity of 335 cP.

### EXAMPLE 8

Example 8 was prepared using the method described for Example 1, but with a relative concentration of each monomer and surfactant in the monomer emulsion feed as reflected in Table 1. The resulting polymer dispersion had 49.2% total solids, an average particle size of 160 nm, a pH of 2.7, and a viscosity of 1.34 cP.

### COMPARATIVE EXAMPLE 1

Comparative Example 1 was prepared using the method described for Example 1, but with double the persulfate as in Example 1 and with the monomers and surfactants and relative concentration of each monomer and surfactant in the monomer emulsion feed as reflected in Table 1. The resulting polymer dispersion had 49.4% total solids, an average particle size of 152 nm, a pH of 7.0 (adjusted with 10% aqueous NaOH), and a viscosity of 270 cP.

### COMPARATIVE EXAMPLE 2

Comparative Example 2 was prepared using the method described for Example 1, but with double the persulfate as in Example 1 and with the monomers and surfactants and relative concentration of each monomer and surfactant in the monomer emulsion feed as reflected in Table 1. The resulting polymer dispersion had 49.0% total solids, an average particle size of 146 nm, a pH of 7.2 (adjusted with 10% aqueous NaOH), and a viscosity of 85 cP.

### COMPARATIVE EXAMPLE 3

Comparative Example 3 was prepared using the method described for Example 1, but with double the persulfate as in Example 1 and with the monomers and surfactants and relative concentration of each monomer and surfactant in the monomer emulsion feed as reflected in Table 1. The resulting polymer dispersion had 48.7% total solids, an average particle size of 155 nm, a pH of 7.3 (adjusted with 10% aqueous NaOH), and a viscosity of 55 cP.

The monomer and surfactant concentrations used in Examples 1-8 and Comparative Examples 1-3 (CE1-CE3) are summarized in Table 1 below. CALFAX DB-45 from Pilot Chemical Company is a tetrapropylene derivative of sulfonated 1,1'-oxybisbenzene, and is an anionic surfactant. The (EO)₆, (EO)₈, and (EO)₁₀, surfactants as listed are nonionic ethylene oxide adducts of tridecyl alcohol.

**Table 1. Monomer and Surfactant Concentrations in Polyacrylate Polymer Dispersions (in parts per 100 monomers)**

| **Example:** | **1** | **2^{(a)}** | **3** | **4** | **5** | **6** | **7^{(b)}** | **8** | **CE1^{(b)}** | **CE2^{(b)}** | **CE3^{(b)}** |
|---|---|---|---|---|---|---|---|---|---|---|---|
| Styrene | 10 | 8 | 10 | 10 | 10 | 45 | 45 | 0 | 45 | 45 | 45 |
| MMA | 0 | 0 | 0 | 0 | 0 | 0 | 0 | 47 | 0 | 0 | 0 |
| n-BA | 63.5 | 90 | 88.5 | 65 | 63.5 | 53 | 53 | 51 | 53 | 53 | 53 |
| 2-EHA | 25 | 0 | 0 | 25 | 2.5 | 0 | 0 | 0 | 0 | 0 | 0 |
| Acrylic acid | 0 | 0 | 0 | 0 | 0 | 0 | 0 | 0 | 0 | 2 | 2 |
| Acrylamide | 1.5 | 2 | 1.5 | 0 | 1.5 | 2 | 2 | 2 | 2 | 0 | 0 |
| (EO)₆ surfactant | 0 | 0 | 0 | 0 | 2 | 0 | 0 | 0 | 0 | 0 | 0 |
| (EO)₈ surfactant | 2 | 2 | 2 | 2 | 0 | 2 | 0 | 0 | 0 | 0 | 0 |
| (EO) ₁₀ surfactant | 0 | 0 | 0 | 0 | 0 | 0 | 1.5 | 2 | 0 | 0 | 1.5 |
| CALFAX DB-45 | 0 | 0 | 0 | 0 | 0 | 0 | 0 | 0 | 1.5 | 1.5 | 0 |

| | | | | | | | | | | | |
|---|---|---|---|---|---|---|---|---|---|---|---|
| ^{(a)} Recipe contains 40% more polystyrene seed than Example 1. ^{(b)} Recipe contains double the persulfate amount that is in Example 1. | | | | | | | | | | | |

The latices prepared according to Examples 1-3 were low Tg styrene-acrylic polymers having a Tg of about -40 to -45°C and contained 1.5-2.0% acrylamide. The latex of Example 4 was a low Tg polymer without acrylamide. The latex of Example 5 used a smaller EO-chain surfactant. The latices of Examples 6 and 7 were high Tg polymers based on styrene and n-butylacrylate. The latex of Example 8 is a straight acrylic polymer, resulting in a polymer of high Tg, and also used a larger EO-chain surfactant. The latices of Comparative Examples 1 through 3 can be compared with the latex of Example 7, wherein the choice of acrylamide versus acrylic acid in otherwise the same formulation can be compared, and likewise the choice of the nonionic (EO)₁₀ surfactant versus CALFAX DB-45 in the same formulation can be compared.
When 1 drop of each latex was put into 2-3 mL of a 1.0 M calcium chloride (CaCl₂) solution, each of latices of Examples 1-8 and Comparative Example 1 were stable, exhibiting no coagulation. The latices of Comparative Examples 2 and 3, which included acrylic acid, immediately coagulated in the presence of the CaCl₂ solution.

### Synthesis of Example Latices - Styrene Butadiene Latices

### EXAMPLE 9

The following ingredients were charged in a reaction vessel: 1076.3 g water, 36.6 g of a 32% active seed aqueous polystyrene emulsion, 1.3 g 40% aqueous solution of EDTA and 1.7 g tetrasodium pyrophosphate. The mixture was heated to 90°C. From an initiator feed of 166.2 g water and 12.8 g sodium persulfate, 28.5 % was removed and added to the reaction mixture. Subsequently, the following four separate feeds were added with a constant feed rate. Feed (a) was the remainder of the initiator feed, which was added over 5.0 hours. Feed (b) was an aqueous feed consisting of 549.6 g water, 41.5 g of an 8-mole ethylene oxide adduct of tridecyl alcohol (90% active in water), 1.9 g tetrasodium pyrophosphate, and 70.5 g of 53% aqueous acrylamide and was added over 2.5 hours. Feed (c) consisted of 595.0 g of 1,3-butadiene, which was added over 4.0 hours. Feed (d) consisted of a mixture of 1130.3 g styrene and 13.5 g *tert*-dodecylmercaptan, which was added over 4.0 hours. During the entire duration of the feeds the temperature was maintained at 90°C. After a 60-minute post-reaction period the resulting dispersion was allowed to cool down, and the pH was adjusted to 6.5 using 10% aqueous KOH. In a stripping reactor equipped with a steam inlet, the product was subjected to a monomer removal procedure. While controlling the temperature at 74°C, steam was passed through the dispersion and two solutions were simultaneously fed in two streams within 2.0 hours:

### EXAMPLE 10

Example 10 was prepared using the method described for Example 9, but with the monomers and surfactants and relative concentration of each monomer and surfactant as reflected in Table 2 and with only 30 minutes of post-reaction time. The resulting polymer dispersion had 49.9% total solids, an average particle size of 157 nm, a pH of 3.9, and the resulting polymer had a Tg of+7°C.

### EXAMPLE 11 I

The following ingredients were charged in a reaction vessel: 880.6 g water, 27.8 g of a 32% active seed aqueous emulsion (polystyrene), 1.1 g 40% aqueous solution of EDTA, and 1.4 g tetrasodium pyrophosphate were charged into a reaction vessel. The mixture was heated to 90°C. From an initiator feed of 146.7 g water and 11.3 g sodium persulfate, 28.5% was removed and added to the reaction mixture. Subsequently, the following four separate feeds were added with constant feed rate. Feed (a) consisted of the remainder of the initiator feed, added over 5.0 hours. Feed (b) consisted of an aqueous feed consisting of 457.2 g water, 31.3 g of a 10-mole ethylene oxide adduct of tridecyl alcohol, 1.6 g tetrasodium pyrophosphate, and 73.9 g 53% aqueous acrylamide added over 2.5 hours. Feed (c) consisted of 441.0 g 1,3-butadiene added over 4.0 hours. Feed (d) consisted of a mixture of 982.4 g styrene and 26.8 g *tert*-dodecylmercaptan, added over 4.0 hours. During the entire duration of the feeds the temperature was maintained at 90°C. After a 30-minute post-reaction period the resultant dispersion was allowed to cool. In a stripping reactor equipped with steam inlet the product was subjected to a monomer removal procedure. While controlling the temperature at 74°C, steam was passed through and simultaneously these two solutions were fed in two streams within 2 hours (e) 56 mL aqueous 5% *tert*-butyl hydroperoxide solution and (f) 56 mL aqueous 5% sodium metabisulfite. The resulting polymer dispersion had 50.3% total solids, an average particle size of 164 nm, a pH of 3.2, and the resulting polymer had a Tg of +8°C.

### EXAMPLE 12

Example 12 was prepared using the method described for Example 9, but with the monomers and surfactants and relative concentration of each monomer and surfactant as reflected in Table 2. The resulting polymer dispersion had 51.9% total solids, an average particle size of 160 nm, a pH of 4.6, and the resulting polymer had a Tg of+14°C.

### COMPARATIVE EXAMPLE 4

Comparative Example 4 was prepared using the method described for Example 9, but with the monomers and surfactants and relative concentration of each monomer and surfactant as reflected in Table 2. The resulting polymer dispersion had 52.5% total solids, an average particle size of 1.55 nm, a pH of 5.2, and the resulting polymer had a Tg of +9°C.

### COMPARATIVE EXAMPLE 5

Comparative Example 5 was prepared using the method described for Example 9, but with the monomers and surfactants and relative concentration of each monomer and surfactant as reflected in Table 2. The resulting polymer dispersion had 50.3% total solids, an average particle size of 1.34 nm, a pH of 2.1, and the resulting polymer had a Tg of +11°C.

### COMPARATIVE EXAMPLE 6

Comparative Example 6 was prepared using the method described for Example 9, but with the monomers and surfactants and relative concentration of each monomer and surfactant as reflected in Table 2 and with a shorter reaction time. The resulting polymer dispersion had 53.9% total solids, an average particle size of 143 nm, a pH of 8.5, and the resulting polymer had a Tg of +10°C.

The monomer and surfactant compositions used in Examples 9-12 and in Comparative Examples 4-6 (CE4-CE6) are summarized in Table 2 below. CALFOAM ES-303 from Pilot Chemical Company is a sodium lauryl ether sulfate, and as such is an anionic surfactant. The (EO)₈ and (EO)₁₀, surfactants as listed are nonionic ethylene oxide adducts of tridecyl alcohol.

All latices described in Table 2 have similar T_{g}'s. The latices of Examples 9-12 comprise nonionic monomers and nonionic surfactants, whereas the latices of Comparative Examples 4-6 include carboxylic acid monomers and the latices of Comparative Example 5 and Comparative Example 6 additionally contain an anionic surfactant.

When 1 drop of each latex was put into 2-3 mL of a 1.0 M calcium chloride (CaCl₂) solution, each of latices of Examples 9-12 were stable, exhibiting no coagulation. The latices of Comparative Examples 5 and 6, which included acrylic acid, immediate coagulated in the presence of the CaCl₂ solution.

**Table 2. Monomer and Surfactant Concentrations for Poly(styrene-butadiene) Polymer Dispersions (in parts per 100 monomers)**

| **Example:** | **9** | **10** | **11** | **12** | **CE4** | **CE5** | **CE6** |
|---|---|---|---|---|---|---|---|
| Styrene | 63.0 | 63.0 | 66.0 | 66.0 | 65.5 | 60.5 | 62.7 |
| 1,3-Butadiene | 35.0 | 34.8 | 31.5 | 31.5 | 31.5 | 35.0 | 35.2 |
| Acrylamide | 2.0 | 2.2 | 2.5 | 2.5 | 2.5 | 0.0 | 0.0 |
| Itaconic acid | 0.0 | 0.0 | 0.0 | 0.0 | 0.5 | 0.5 | 1.8 |
| Acrylic acid | 0.0 | 0.0 | 0.0 | 0.0 | 0.0 | 4.0 | 0.3 |
| (EO)₈ surfactant | 2.0 | 0.0 | 0.0 | 0.0 | 0.0 | 0.0 | 0.0 |
| (EO)₁₀ surfactant | 0.0 | 2.0 | 2.0 | 2.0 | 2.0 | 0.0 | 0.0 |
| *t*-dodecylmercaptan | 0.8 | 0.8 | 1.8 | 0.8 | 1.8 | 0.8 | 1.4 |
| CALFOAM ES-303 | 0.0 | 0.0 | 0.0 | 0.0 | 0.0 | 0.7 | 0.4 |

### Testing of Molded Films for Mechanical Strength and Water Absorption

A latex film was prepared from each of the latices prepared according to Examples 1-12 and Comparative Examples 1-5 by first adding to each polymer dispersion enough water to achieve a 40% total solids content. The resulting diluted dispersion was then poured into a Teflon mold and air dried for 7 days at 25°C with 50% humidity. After an initial drying phase of 2 to 3 days, the film was flipped upside down to expose both sides to the air. The thickness of each dry latex film was on the order of 0.02 inches.

The sample films were prepared for tensile experiments by placing releasing paper on both sides of each sample film. Corresponding 0.158 inch width "dog bone" shaped samples were cut. Three samples of each film were tested using an Instron 4505, equipped with a 22 1b load cell. The samples were elongated at a rate of 7.9 inches per minute, and a maximum strength and elongation at break were recorded.

The water absorption of the films was determined by cutting 2 inch by 2 inch film samples, measuring the dry weight of each sample, soaking each sample in deionized water for 24 hours, then measuring the weight of the sample after removal from the water. Water absorption is expressed as a percentage of weight gained, and is an average for between 3 and 5 specimens per latex.

Table 3 provides the mechanical properties of the latices of Examples 1-8 and Comparative Examples 1-3 below.

**Table 3. Mechanical Properties of Acrylic Latex Polymer Films**

| **Example:** | **1** | **2** | **3** | **4** | **5** | **6** | **7** | **8** | **CE1** | **CE2** | **CE3** |
|---|---|---|---|---|---|---|---|---|---|---|---|
| Tensile strength (psi) | 82 | 140 | 104 | 12 | 114 | 896 | 977 | 1303 | 1280 | 1393 | 1078 |
| Elongation ^{(%)} | 1794 | 1096 | 1663 | >2600 | 1425 | 592 | 514 | 423 | 455 | 455 | 544 |
| Water absorption ^{(%)} | 10 | 11 | 12 | 6 | 13 | 4 | 5 | 11 | 14 | 11 | 7 |

The lowest water absorptions were observed with the high-styrene polymers of Examples 6 and 7. Comparative Examples 1 through 3 had a similar polymer glass transition temperature as Examples 6 and 7, but Comparative Examples 1 through 3 displayed significantly higher water absorptions.

Table 4 provides the mechanical properties of the latices of Examples 9-11 and Comparative Examples 4 and 5 below.

**Table 4. Mechanical Properties of Styrene-Butadiene Latex Polymer Films**

| **Latex:** | **9** | **10** | **11** | **12** | **CE4** | **CE5** |
|---|---|---|---|---|---|---|
| Tensile strength (psi) | 702 | 701 | 389 | 1400 | 486 | N/A |
| Elongation (%) | 733 | 649 | 681 | 424 | 530 | N/A |
| Water absorption (%) | 1.6 | 1.9 | 2.4 | 1.7^{(a)} | 2.3 ^{(b)} | 21.9^{(c)} |

| | | | | | | |
|---|---|---|---|---|---|---|
| ^{(a)} Water absorption is 1.9% when the pH of the latex is adjusted to 8. ^{(b)} Water absorption is 2.5% when the pH of the latex is adjusted to 8. ^{(c)} pH of the latex is adjusted to 8. | | | | | | |

Water absorption from the three styrene-butadiene polymers of Examples 9-12 were all very low, on the order of 2%, as shown in Table 4. The latex of Comparative Example 5 had a significantly higher water absorption, showing the detrimental impact of anionic monomers and surfactants on water resistance.

Additional polymer films were prepared and more extensive tests were performed on the dry and wet films of Examples 6 and 9 as shown in Table 5 below. The polymer films were soaked in water for 24 hours, patted dry with a paper towel, then tested for tensile strength and elongation immediately following removal from the water bath (shown as "wet polymer film"). Another set of polymer films of Example 6 and 9 were soaked in water for 24 hours, allowed to air dry for 24 hours, then tested for tensile strength and elongation (shown as "re-dried wet polymer film"). As with the film formed from the acrylic latex prepared according to Example 6, the film derived from the styrene-butadiene latex of Example 9 did not lose cohesive strength after a 24 hour soak period in water.

**Table 5. Wet and Dry Mechanical Properties of the Polymer Films**

| | Example 6 | | Example 9 | |
|---|---|---|---|---|
| | Tensile strength (psi) | Elongation at break (%) | Tensile strength (psi) | Elongation at break (%) |
| Dry Polymer Film | 896 | 592 | 702 | 733 |
| Wet Polymer Film | 649 | 680 | 757 | 754 |
| Re-dried Wet Polymer Film | 880 | 669 | 638 | 710 |

### Testing of Films Applied to Concrete for Moisture Vapor Transmission (MVT) Rate

A coating was prepared from the latices according to Examples 3, 7, 9, 11, and Comparative Examples 1, 4, and 6. To determine the MVT for these latices on fresh concrete, the each polymer dispersion was diluted with water to achieve a 40% total solids content. The resulting diluted dispersions were then applied with a brush to the surface of samples of the same batch of "wet" concrete, which had been cured for 48 hours prior to application of the polymer dispersion. The coating weight of polymer dispersion on wet concrete surface was 66 to 69 1b/1000 ft² . The polymer coatings were allowed to dry under a plastic tent in a temperature (25° C) and humidity (50%) controlled environment for 72 hours. Next, a defined amount of dry CaCl₂ was placed under the sealed plastic tent onto the coated concrete surface. After 72 hours the tent was opened and the CaCl₂ was weighed to determine the amount of water it had absorbed. MVT results are given in 1b water per 1000 ft²-day.

The moisture vapor emission rate of each concrete sample was measured using a calcium chloride test kit in accordance with ASTM E-1907-97 and ASTM F-1869-98. The measured moisture vapor emission rate is provided in Table 6 below.

**Table 6. Moisture Vapor Transmission (MVT) Rate for Selected Polymer Dispersions (in 1b/1000 ft²-day)**

| **Example** | **3** | **7** | **CE1** | **9** | **11^{(a)}** | **CE4^{(b)}** | **CE6** |
|---|---|---|---|---|---|---|---|
| Type | Sty-acr. | Sty-acr. | Sty-acr. | SB | SB | SB | SB |
| MVT | 14.8 | 6.8 | 7.9 | 2.7 | 1.9 | 4.1 | 9.2 |

| | | | | | | | |
|---|---|---|---|---|---|---|---|
| ^{(a)} MVT result is 1.9 when latex is adjusted to pH of 8 prior to coating. ^{(b)} MVT result is 4.2 when latex is adjusted to pH of 8 prior to coating. Sty-acr. = styrene-acrylic SB = styrene-butadiene | | | | | | | |

It is understood that upon reading the above description of the present invention, one skilled in the art could make changes and variations therefrom. These changes and variations are included in the spirit and scope of the following appended claims.

## Claims

1. A product, comprising:
a substrate; and
a film that limits the transmission of water vapor provided adjacent to said substrate comprising a polymer derived from one or more copolymerizable nonionic monomers polymerized in an aqueous medium at a polymerization temperature in the presence of at least one nonionic surfactant and in the absence of ionic surfactants, wherein the cloud temperature of the at least one nonionic surfactant is less than the polymerization temperature.

2. The product as claimed in claim 1, wherein the substrate is concrete or gypsum.

3. The product as claimed in claim 1, wherein the substrate includes Portland cement.

4. The product as claimed in claim 1, wherein the substrate is stone or tile..

5. The product as claimed in claim 1, wherein the at least one nonionic surfactant includes an alkylene oxide adduct of an alkyl alcohol, alkylbenzene alcohol or dialkylbenzene alcohol wherein the number of alkylene oxide groups is less than or equal to 14.

6. The product as claimed in claim 5, wherein the alkylene oxide groups are represented by the formula (EO)ₘ(PO)ₙ, wherein (EO) is ethylene oxide, (PO) is propylene oxide, and (m+n) ≤14.

7. The product as claimed in claim 6, wherein the at least one nonionic surfactant comprises an ethylene oxide adduct of tridecyl alcohol with between 6 and 10 moles of ethylene oxide.

8. The product as claimed in claim 1, wherein the one or more copolymerizable nonionic monomers are selected from the group consisting of styrene, (meth)acrylates, butadiene, (meth)acrylamides, and (meth)acrylamide derivatives.

9. The product as claimed in claim 1, wherein the film further comprises a pigment.

10. The product as claimed in claim 1, wherein said pigment comprises calcium carbonate.

11. The product as claimed in claim 1, wherein the water absorption of the film after immersion in water for 24 hours is less than 10% by weight, based on the weight of the dry film.

12. The product as claimed in claim 1, wherein the film is coated directly on the substrate.

13. The product as claimed in claim 1, wherein said film is formed by:
applying adjacent to the substrate an electrically neutral polymer dispersion comprising at least one polymer dispersed in a dispersing medium, wherein said polymer dispersion is formed from polymerizing one or more nonionic copolymerizable monomers at a polymerization temperature in the presence of at least one nonionic surfactant and in the absence of ionic surfactants, and
evaporating the dispersing medium.

14. The product as claimed in claim 1, wherein the polymer is not derived from ionic monomers.

15. The product as claimed in claim 1, further comprising a coating layer provided adjacent to said film, wherein said film is located between said substrate and said coating layer.

16. The product as claimed in claim 15, wherein said coating layer comprises an adhesive.

17. A product, comprising:
a substrate; and
a film for limiting the transmission of water vapor provided adjacent to said substrate comprising a polymer derived from one or more copolymerizable nonionic monomers polymerized in the presence of at least one nonionic surfactant and in the absence of ionic surfactants, wherein the nonionic surfactant comprises an alkylene oxide adduct of an alkyl alcohol, alkylbenzene alcohol or dialkylbenzene alcohol wherein the number of alkylene oxide groups is less than or equal to 14.

18. The product as claimed in claim 17, wherein the alkylene oxide groups include one or more of ethylene oxide (EO)ₘ and propylene oxide (PO)ₙ, wherein (m+n)≤ 14.

19. A composition, comprising
at least one polymer dispersed in a dispersing medium, wherein said composition is formed by polymerizing one or more nonionic copolymerizable monomers at a polymerization temperature in the presence of at least one nonionic surfactant and in the absence of ionic surfactants, wherein the cloud temperature of the at least one nonionic surfactant is less than the polymerization temperature, and
at least one pigment.

20. The composition as claimed in claim 19, wherein said at least one pigment includes calcium carbonate.

21. The composition as claimed in claim 19, wherein the at least one nonionic surfactant includes an alkylene oxide adduct of an alkyl alcohol, alkylbenzene alcohol or dialkylbenzene alcohol wherein the number of alkylene oxide groups is less than or equal to 14.

22. The composition as claimed in claim 21, wherein the alkylene oxide groups are represented by the formula (EO)ₘ(PO)ₙ, wherein (EO) is ethylene oxide, (PO) is propylene oxide, and (m+n) ≤ 14.

23. The composition as claimed in claim 22, wherein the at least one nonionic surfactant comprises an ethylene oxide adduct of tridecyl alcohol with between 6 and 10 moles of ethylene oxide.

24. The composition as claimed in claim 19, wherein the one or more copolymerizable nonionic monomers are selected from the group consisting of styrene, (meth)acrylates, butadiene, (meth)acrylamides, and (meth)acrylamide derivatives.

25. A film formed by drying the composition as claimed in claim 19.

26. The film as claimed in claim 25, wherein the water absorption of the film after immersion in water for 24 hours is less than 10% by weight, based on the weight of the dry film.

27. A method of affecting the transmission of water vapor with respect to a substrate comprising applying a water vapor barrier composition adjacent to the substrate, the water vapor barrier composition comprising an essentially electrically neutral polymer dispersion formed by polymerizing one or more monomers in a dispersing medium at a polymerization temperature in the absence of anionic surfactants and in the presence of at least one nonionic surfactant, wherein the cloud temperature of the at least one nonionic surfactant is less than the polymerization temperature:

28. The method as claimed in claim 27, wherein the at least one surfactant comprises an alkylene oxide adduct of an alkyl alcohol, alkylbenzene alcohol or dialkylbenzene alcohol wherein the number of alkylene oxide groups is less than or equal to 14.

29. The method as claimed in claim 28, wherein the alkylene oxide groups are represented by the formula (EO)ₘ(PO)ₙ, wherein (EO) is ethylene oxide, (PO) is propylene oxide, and (m+n) ≤ 14.

30. The method as claimed in claim 29, wherein the at least one nonionic surfactant comprises an ethylene oxide adduct of tridecyl alcohol with between 6 and 10 moles of ethylene oxide.

31. The method as claimed in claim 27, wherein the one or more copolymerizable nonionic monomers include styrene and butadiene.

32. The method as claimed in claim 27, wherein the water vapor barrier composition further comprises at least one pigment.

33. The method as claimed in claim 27, wherein the water vapor barrier composition is applied directly on the substrate.

34. The method as claimed in claim 27, wherein the substrate includes Portland cement.

35. The method as claimed in claim 27, wherein the water vapor barrier composition is applied to wet concrete.

36. A method of making a water vapor barrier composition, comprising:
polymerizing in a dispersing medium one or more nonionic copolymerizable monomers at a polymerization temperature in the presence of at least one nonionic surfactant and in the absence of ionic surfactants, wherein the cloud temperature of the at least one nonionic surfactant is less than the polymerization temperature to produce a polymer dispersion; and
mixing the polymer dispersion with a pigment.

37. A method preparing a film having limited water vapor permeability; comprising the steps of:
polymerizing one or more nonionic copolymerizable monomers in a dispersing medium at a polymerization temperature in the presence of at least one nonionic surfactant and in the absence of ionic surfactants, wherein the cloud temperature of the at least one nonionic surfactant is less than the polymerization temperature to produce a polymer dispersion;
mixing the polymer dispersion with a pigment to produce a water vapor barrier composition; and
evaporating the water vapor barrier composition to form a film.

## Patentansprüche

1. Produkt, umfassend:
ein Substrat und
einen an das Substrat angrenzend angeordneten, den Durchgang von Wasserdampf einschränkenden Film; umfassend ein Polymer, das sich von einem oder mehreren copolymerisierbaren nichtionischen Monomeren ableitet, die in einem wäßrigen Medium bei einer Polymerisationstemperatur in Gegenwart mindestens eines nichtionischen Tensids und in Abwesenheit von ionischen Tensiden polymerisiert worden sind, wobei die Trübungstemperatur des mindestens einen nichtionischen Tensids unter der Polymerisationstemperatur liegt.

2. Produkt nach Anspruch 1, wobei es sich bei dem Substrat um Beton oder Gips handelt.

3. Produkt nach Anspruch 1, wobei das Substrat Portlandzement enthält.

4. Produkt nach Anspruch 1, wobei es sich bei dem Substrat um Stein oder Fliesen handelt.

5. Produkt nach Anspruch 1, wobei das mindestens eine nichtionische Tensid ein Alkylenoxid-Addukt eines Alkylalkohols, Alkylbenzolalkohols oder Dialkylbenzolalkohols, worin die Zahl der Alkylenoxidgruppen kleiner gleich 14 ist, enthält.

6. Produkt nach Anspruch 5, wobei die Alkylenoxidgruppen durch die Formel (EO)ₘ(PO)ₙ, worin (EO) für Ethylenoxid steht, (PO) für Propylenoxid steht und (m+n)≤14, wiedergegeben werden.

7. Produkt nach Anspruch 6, wobei das mindestens eine nichtionische Tensid ein Ethylenoxid-Addukt von Tridecylalkohol mit zwischen 6 und 10 mol Ethylenoxid umfaßt.

8. Produkt nach Anspruch 1, wobei das oder die copolymerisierbaren nichtionischen Monomere aus der Gruppe bestehend aus Styrol, (Meth)acrylaten, Butadien, (Meth)acrylamiden und (Meth)acrylamidderivaten ausgewählt sind.

9. Produkt nach Anspruch 1, wobei der Film ferner ein Pigment umfaßt.

10. Produkt nach Anspruch 1, wobei das Pigment Calciumcarbonat umfaßt.

11. Produkt nach Anspruch 1, wobei die Wasserabsorption des Films nach Eintauchen in Wasser über einen Zeitraum von 24 Stunden weniger als 10 Gew.-%, bezogen auf das Gewicht des trockenen Films, beträgt.

12. Produkt nach Anspruch 1, wobei der Film direkt auf das Substrat aufgetragen ist.

13. Produkt nach Anspruch 1, wobei der Film **dadurch** gebildet wird, daß man:
an das Substrat angrenzend eine elektrisch neutrale Polymerdispersion, die mindestens ein in einem Dispergiermedium dispergiertes Polymer umfaßt, aufbringt, wobei die Polymerdispersion durch Polymerisation von einem oder mehreren copolymerisierbaren nichtionischen Monomeren bei einer Polymerisationstemperatur in Gegenwart mindestens eines nichtionischen Tensids und in Abwesenheit von ionischen Tensiden gebildet wird, und
das Dispergiermedium verdampft.

14. Produkt nach Anspruch 1, wobei sich das Polymer nicht von ionischen Monomeren ableitet.

15. Produkt nach Anspruch 1, ferner umfassend eine an den Film angrenzend angeordnete Überzugsschicht, wobei sich der Film zwischen dem Substrat und der Überzugsschicht befindet.

16. Produkt nach Anspruch 15, wobei die Überzugsschicht einen Klebstoff umfaßt.

17. Produkt, umfassend:
ein Substrat und
einen an das Substrat angrenzend angeordneten, den Durchgang von Wasserdampf einschränkenden Film, umfassend ein Polymer, das sich von einem oder mehreren copolymerisierbaren nichtionischen Monomeren, die in Gegenwart mindestens eines nichtionischen Tensids und in Abwesenheit von ionischen Tensiden polymerisiert worden sind, ableitet, wobei das nichtionische Tensid ein Alkylenoxid-Addukt eines Alkylalkohols, Alkylbenzolalkohols oder Dialkylbenzolalkohols, worin die Zahl der Alkylenoxidgruppen kleiner gleich 14 ist, umfaßt.

18. Produkt nach Anspruch 17, wobei die Alkylenoxidgruppen Ethylenoxid (EO)ₘ und/oder Propylenoxid (PO)ₙ, worin (m+n)≤14, enthalten.

19. Zusammensetzung, umfassend mindestens ein in einem Dispergiermedium dispergiertes Polymer, wobei die Zusammensetzung durch Polymerisation von einem oder mehreren copolymerisierbaren nichtionischen Monomeren bei einer Polymerisationstemperatur in Gegenwart mindestens eines nichtionischen Tensids und in Abwesenheit von ionischen Tensiden gebildet wird, wobei die Trübungstemperatur des mindestens einen nichtionischen Tensids unter der Polymerisationstemperatur liegt, und mindestens ein Pigment.

20. Zusammensetzung nach Anspruch 19, wobei das mindestens eine Pigment Calciumcarbonat enthält.

21. Zusammensetzung nach Anspruch 19, wobei das mindestens eine nichtionische Tensid ein Alkylenoxid-Addukt eines Alkylalkohols, Alkylbenzolalkohols oder Dialkylbenzolalkohols, worin die Zahl der Alkylenoxidgruppen kleiner gleich 14 ist, enthält.

22. Zusammensetzung nach Anspruch 21, wobei die Alkylenoxidgruppen durch die Formel (EO)ₘ(PO)ₙ, worin (EO) für Ethylenoxid steht, (PO) für Propylenoxid steht und (m+n)≤14, wiedergegeben werden.

23. Zusammensetzung nach Anspruch 22, wobei das mindestens eine nichtionische Tensid ein Ethylenoxid-Addukt von Tridecylalkohol mit zwischen 6 und 10 mol Ethylenoxid umfaßt.

24. Zusammensetzung nach Anspruch 19, wobei das oder die copolymerisierbaren nichtionischen Monomere aus der Gruppe bestehend aus Styrol, (Meth)-acrylaten, Butadien, (Meth)acrylamiden und (Meth)-acrylamidderivaten ausgewählt sind.

25. Film, gebildet durch Trocknen der Zusammensetzung nach Anspruch 19.

26. Film nach Anspruch 25, wobei die Wasserabsorption des Films nach Eintauchen in Wasser über einen Zeitraum von 24 Stunden weniger als 10 Ges.-%, bezogen auf das Gewicht des trockenen Films, beträgt.

27. Verfahren zur Beeinflussung des Durchgangs von Wasserdampf bezüglich eines Substrats, bei dem man an das Substrat angrenzend eine Wasserdampfbarrierezusammensetzung aufbringt, wobei die Wasserdampfbarrierezusammensetzung eine im wesentlichen elektrisch neutrale Polymerdispersion umfaßt, die durch Polymerisation von einem oder mehreren Monomeren in einem Dispergiermedium bei einer Polymerisationstemperatur in Abwesenheit von anionischen Tensiden und in Gegenwart mindestens eines nichtionischen Tensids gebildet worden ist, wobei die Trübungstemperatur des mindestens einen nichtionischen Tensids unter der Polymerisationstemperatur liegt.

28. Verfahren nach Anspruch 27, bei dem das mindestens eine Tensid ein Alkylenoxid-Addukt eines Alkylalkohols, Alkylbenzolalkohols oder Dialkylbenzolalkohols, worin die Zahl der Alkylenoxidgruppen kleiner gleich 14 ist, umfaßt.

29. Verfahren nach Anspruch 28, bei dem die Alkylenoxidgruppen durch die Formel (EO)ₘ(PO)ₙ, worin (EO) für Ethylenoxid steht, (PO) für Propylenoxid steht und (m+n)≤14, wiedergegeben werden.

30. Verfahren nach Anspruch 29, bei dem das mindestens eine nichtionische Tensid ein Ethylenoxid-Addukt von Tridecylalkohol mit zwischen 6 und 10 mol Ethylenoxid umfaßt.

31. Verfahren nach Anspruch 27, bei dem das oder die copolymerisierbaren nichtionischen Monomere Styrol und Butadien enthalten.

32. Verfahren nach Anspruch 27, bei dem die Wasserdampfbarrierezusammensetzung ferner mindestens ein Pigment umfaßt.

33. Verfahren nach Anspruch 27, bei dem man die Wasserdampfbarrierezusammensetzung direkt auf das Substrat aufbringt.

34. Verfahren nach Anspruch 27, bei dem das Substrat Portlandzement enthält.

35. Verfahren nach Anspruch 27, bei dem man die Wasserdampfbarrierezusammensetzung auf feuchten Beton aufbringt.

36. Verfahren zur Herstellung einer Wasserdampfbarrierezusammensetzung, bei dem man:
in einem Dispergiermedium ein oder mehrere nichtionische copolymerisierbare Monomere bei einer Polymerisationstemperatur in Gegenwart mindestens eines nichtionischen Tensids und in Abwesenheit von ionischen Tensiden polymerisiert, wobei die Trübungstemperatur des mindestens einen nichtionischen Tensids unter der Polymerisationstemperatur liegt, wobei man eine Polymerdispersion erhält; und
die Polymerdispersion mit einem Pigment mischt.

37. Verfahren zur Herstellung eines Films mit eingeschränkter Wasserdampfdurchlässigkeit, bei dem man:
in einem Dispergiermedium ein oder mehrere nichtionische copolymerisierbare Monomere bei einer Polymerisationstemperatur in Gegenwart mindestens eines nichtionischen Tensids und in Abwesenheit von ionischen Tensiden polymerisiert, wobei die Trübungstemperatur des mindestens einen nichtionischen Tensids unter der Polymerisationstemperatur liegt, wobei man eine Polymerdispersion erhält;
die Polymerdispersion mit einem Pigment mischt, wobei man eine Wasserdampfbarrierezusammensetzung erhält; und
die Wasserdampfbarrierezusammensetzung zur Bildung eines Films verdampft.

## Revendications

1. Produit, comprenant :
un substrat ; et
un film qui limite la transmission de vapeur d'eau se trouvant en position adjacente audit substrat comprenant un polymère dérivé d'un ou plusieurs monomères non ioniques copolymérisables polymérisés dans un milieu aqueux à une température de polymérisation, en présence d'au moins un tensioactif non ionique et en l'absence de tensioactifs ioniques, dans lequel la température de trouble du ou des tensioactifs non ioniques est inférieure à la température de polymérisation.

2. Produit selon la revendication 1, dans lequel le substrat est du béton ou du gypse.

3. Produit selon la revendication 1, dans lequel le substrat contient du ciment Portland.

4. Produit selon la revendication 1, dans lequel le substrat est de la pierre ou de la tuile.

5. Produit selon la revendication 1, dans lequel le ou les tensioactifs non ioniques comprennent un composé d'addition à l'oxyde d'alkylène d'un alcool alkylique, d'un alkylbenzène-alcool ou d'un dialkylbenzène-alcool dans lequel le nombre de groupes oxyde d'alkylène est inférieur ou égal à 14.

6. Produit selon la revendication 5, dans lequel les groupes oxyde d'alkylène sont représentés par la formule (EO)ₘ(PO)ₙ, dans laquelle (EO) représente l'oxyde d'éthylène, (PO) représente l'oxyde de propylène, et (m+n) ≤ 14.

7. Produit selon la revendication 6, dans lequel le ou les tensioactifs non ioniques comprennent un composé d'addition à l'oxyde d'éthylène d'alcool tridécylique comportant entre 6 et 10 moles d'oxyde d'éthylène.

8. Produit selon la revendication 1, dans lequel le ou les monomères non ioniques copolymérisables sont choisis dans le groupe constitué par le styrène, les (méth)acrylates, le butadiène, les (méth)acrylamides et les dérivés de (méth)acrylamide.

9. Produit selon la revendication 1, dans lequel le film comprend en outre un pigment.

10. Produit selon la revendication 1, dans lequel ledit pigment comprend du carbonate de calcium.

11. Produit selon la revendication 1, dans lequel l'absorption d'eau du film après immersion dans l'eau pendant 24 heures est inférieure à 10% en poids, par rapport au poids du film sec.

12. Produit selon la revendication 1, dans lequel le film est appliqué directement sur le substrat.

13. Produit selon la revendication 1, dans lequel ledit film est formé par :
l'application en position adjacente au substrat d'une dispersion de polymère de charge électrique nulle comprenant au moins un polymère dispersé dans un milieu de dispersion, dans lequel ladite dispersion de polymère est formée par la polymérisation d'un ou plusieurs monomères copolymérisables non ioniques à une température de polymérisation, en présence d'au moins un tensioactif non ionique et en l'absence de tensioactifs ioniques, et
l'évaporation du milieu de dispersion.

14. Produit selon la revendication 1, dans lequel le polymère n'est pas dérivé de monomères ioniques.

15. Produit selon la revendication 1, comprenant en outre une couche de revêtement placée en position adjacente audit film, dans lequel ledit film est situé entre ledit substrat et ladite couche de revêtement.

16. Produit selon la revendication 15, dans lequel ladite couche de revêtement comprend un adhésif.

17. Produit, comprenant :
un substrat ; et
un film permettant de limiter la transmission de la vapeur d'eau se trouvant en position adjacente audit substrat comprenant un polymère dérivé d'un ou plusieurs monomères non ioniques copolymérisables polymérisés en présence d'au moins un tensioactif non ionique et en l'absence de tensioactifs ioniques, dans lequel le tensioactif non ionique comprend un composé d'addition à l'oxyde d'alkylène d'un alcool alkylique, d'un alkylbenzène-alcool ou d'un dialkylbenzène-alcool dans lequel le nombre de groupes oxyde d'alkylène est inférieur ou égal à 14.

18. Produit selon la revendication 17, dans lequel les groupes oxyde d'alkylène comprennent un ou plusieurs groupes oxyde d'éthylène (EO)ₘ et oxyde de propylène (PO)ₙ, avec (m+n) ≤ 14.

19. Composition, comprenant
au moins un polymère dispersé dans un milieu de dispersion, dans lequel ladite composition est formée par polymérisation d'un ou plusieurs monomères copolymérisables non ioniques à une température de polymérisation, en présence d'au moins un tensioactif non ionique et en l'absence de tensioactifs ioniques, dans laquelle la température de trouble du ou des tensioactifs non ioniques est inférieure à la température de polymérisation, et
au moins un pigment.

20. Composition selon la revendication 19, dans laquelle ledit au moins un pigment comprend du carbonate de calcium.

21. Composition selon la revendication 19, dans laquelle le ou les tensioactifs non ioniques comprennent un composé d'addition à l'oxyde d'alkylène d'un alcool alkylique, d'un alkylbenzène-alcool ou d'un dialkylbenzène-alcool dans lequel le nombre de groupes oxyde d'alkylène est inférieur ou égal à 14.

22. Composition selon la revendication 21, dans laquelle les groupes oxyde d'alkylène sont représentés par la formule (EO)ₘ(PO)ₙ, dans laquelle (EO) représente l'oxyde d'éthylène, (PO) représente l'oxyde de propylène et (m+n) ≤ 14.

23. Composition selon la revendication 22, dans laquelle le ou les tensioactifs non ioniques comprennent un composé d'addition à l'oxyde d'éthylène d'alcool tridécylique comportant entre 6 et 10 moles d'oxyde d'éthylène.

24. Composition selon la revendication 19, dans laquelle le ou les monomères non ioniques copolymérisables sont choisis dans le groupe constitué par le styrène, les (méth)acrylates, le butadiène, les (méth)-acrylamides et les dérivés de (méth)acrylamide.

25. Film formé par séchage de la composition selon la revendication 19.

26. Film selon la revendication 25, dans lequel l'absorption d'eau du film après immersion dans l'eau pendant 24 heures est inférieure à 10% en poids, par rapport au poids du film sec.

27. Procédé permettant de modifier la transmission de vapeur d'eau relative à un substrat, comprenant l'application d'une composition de barrière à la vapeur d'eau en position adjacente au substrat, la composition de barrière à la vapeur d'eau comprenant une dispersion de polymère de charge électrique pratiquement nulle formée par polymérisation d'un ou plusieurs monomères dans un milieu de dispersion à une température de polymérisation, en l'absence de tensioactifs anioniques et en présence d'au moins un tensioactif non ionique, dans lequel la température de trouble du ou des tensioactifs non ioniques est inférieure à la température de polymérisation.

28. Procédé selon la revendication 27, dans lequel le ou les tensioactifs comprennent un composé d'addition à l'oxyde d'alkylène d'un alcool alkylique, d'un alkylbenzène-alcool ou d'un dialkylbenzène-alcool dans lequel le nombre de groupes oxyde d'alkylène est inférieur ou égal à 14.

29. Procédé selon la revendication 28, dans lequel les groupes oxyde d'alkylène sont représentés par la formule (EO)ₘ(PO)ₙ, dans laquelle (EO) représente l'oxyde d'éthylène, (PO) représente l'oxyde de propylène et (m+n) ≤ 14.

30. Procédé selon la revendication 29, dans lequel le ou les tensioactifs non ioniques comprennent un composé d'addition à l'oxyde d'éthylène d'alcool tridécylique comportant entre 6 et 10 moles d'oxyde d'éthylène.

31. Procédé selon la revendication 27, dans lequel le ou les monomères non ioniques copolymérisables comprennent le styrène et le butadiène.

32. Procédé selon la revendication 27, dans lequel la composition de barrière à la vapeur d'eau comprend en outre au moins un pigment.

33. Procédé selon la revendication 27, dans lequel la composition de barrière à la vapeur d'eau est appliquée directement sur le substrat.

34. Procédé selon la revendication 27, dans lequel le substrat contient du ciment Portland.

35. Procédé selon la revendication 27, dans lequel la composition de barrière à la vapeur d'eau est appliquée sur du béton humide.

36. Procédé de fabrication d'une composition de barrière à la vapeur d'eau, comprenant :
la polymérisation, dans un milieu de dispersion, d'un ou plusieurs monomères copolymérisables non ioniques à une température de polymérisation, en présence d'au moins un tensioactif non ionique et en l'absence de tensioactifs ioniques, dans lequel la température de trouble du ou des tensioactifs non ioniques est inférieure à la température de polymérisation, pour produire une dispersion de polymère ; et
le mélange de la dispersion de polymère avec un pigment.

37. Procédé de préparation d'un film ayant une perméabilité limitée à la vapeur d'eau, comprenant les étapes consistant à :
polymériser un ou plusieurs monomères copolymérisables non ioniques dans un milieu de dispersion à une température de polymérisation, en présence d'au moins un tensioactif non ionique et en l'absence de tensioactifs ioniques, dans lequel la température de trouble du ou des tensioactifs non ioniques est inférieure à la température de polymérisation, pour produire une dispersion de polymère ;
mélanger la dispersion de polymère avec un pigment pour produire une composition de barrière à la vapeur d'eau ; et
évaporer la composition de barrière à la vapeur d'eau pour former un film.
